Europäisches Patentamt

(19) European Patent Office

Office européen des brevets

(11) Veröffentlichungsnummer: **0 105 543**
**A2**

(12) # EUROPÄISCHE PATENTANMELDUNG

(21) Anmeldenummer: **83201268.6**

(51) Int. Cl.³: **B 64 D 17/24**

(22) Anmeldetag: **02.09.83**

(30) Priorität: **03.09.82 DE 3232713**

(43) Veröffentlichungstag der Anmeldung:
**18.04.84 Patentblatt 84/16**

(84) Benannte Vertragsstaaten:
**AT BE CH FR GB IT LI SE**

(71) Anmelder: **AUTOFLUG GMBH**
**Industriestrasse 10**
**D-2084 Rellingen(DE)**

(72) Erfinder: **Nöhren, Hubert**
**Astweg 51**
**D-2000 Hamburg 54(DE)**

(74) Vertreter: **Kühnemann, Klaus**
**Sonderburgstrasse 36**
**D-4000 Düsseldorf 11(DE)**

(54) **Luftfahrt - Bergungssystem.**

(57) Bei einem Luftfahrt-Bergungssystem mit einer Fallschirmtraube, die wenigstens zwei Schirmkappen sowie die zugehörigen Fangleinen enthält, besteht das Problem, es für Drachenflieger geeignet zu machen, nachdem herkömmliche Systeme mit Fallschirmtrauben zu aufwendig sind. Zur Lösung der Aufgabe, einerseits die sichere Rettung des Sportlers und die Bergung seines Sportgerätes zu gewährleisten, andererseits aber dem Sportler zu ermöglichen, seinen vorhandenen Fallschirm weiterverwenden zu können, ist zur Anwendung als Luftnot-Rettungssystem für Drachenflieger die Fallschirmtraube aus wenigstens zwei gleichen selbständigen Einzelfallschirmen mit zugeordnetem Tragegurt (12) zusammengefügt, wobei die Tragegurte durch wenigstens ein Verbindungsmittel (17) derart aneinander gekuppelt sind, daß sie eine Y-Form ausbilden. Vorzugsweise sind die Tragegurte jeweils an der Stelle, wo der Y-Knotenpunkt vorgesehen ist, mit einer Öse (15) versehen, durch die das aus einem bandförmigen Element bestehende Verbindungsmittel, dessen Enden zusammengeknotet sind, lagemäßig fixierbar ist.

FIG. 4

**Patentanwalt**
**Dipl.-Ing. Klaus Kühnemann**
Sonderburgstraße 36
4000 Düsseldorf 11
Telefon (02 11) 57 55 55
Postscheckkonto: Köln 794 14-501

Düsseldorf,den 29.August 1983
KK/pk 5            **0105543**

Autoflug GmbH
Industriestraße 10
2084 Rellingen 2


B e s c h r e i b u n g

Luftfahrt-Bergungssystem


Die Erfindung betrifft ein Luftfahrt-Bergungssystem mit einer Fallschirmtraube, die wenigstens zwei Schirmkappen sowie die zugehörigen Fangleinen enthält. Das erfindungsgemäße Bergungssystem ist insbesondere für motorisierte Drachenflieger bestimmt. Die dabei benutzten Luftfahrzeuge werden Ultra-Leichtflugzeuge oder auch "UL" genannt.

Luftfahrt-Bergungssysteme mit Fallschirmtrauben sind bekannt, vgl. Ewing "Recovery Systems Design Guide", herausgegeben vom US-Department of Commerce, National Technical Information Service, Dezember 1978. Die zu einer Traube zusammengefaßten Fallschirme schließen dabei mit ihren Fangleinen an jeweils einen Tragegurt an, welche Y-förmig mit einem Tragegurt des zu bergenden Gegenstandes verbunden sind. Hierbei handelt es sich ausschließlich um Systeme zur Bergung von Lasten, z. B. Containern.

Beim Drachenflugsport ist es bekannt, im Luftnotfall nicht nur den Drachenflieger, d. h. den
Menschen, mittels Fallschirm zu retten, was als
solches behördlich vorgeschrieben ist, sondern
es wird gleichzeitig auch das Fluggerät in Gestalt
des Flugdrachens geborgen. Hierzu ist ein Fallschirm-
Rettungs- und Bergungssystem vorgesehen, welches nicht
am Menschen, sondern am Flugdrachen angreift und im
Notfall diesen zusammen mit dem daran zwangsweise
befestigten Piloten langsam zur Erde absteigen läßt.
Das dabei zu bewältigende Gesamtgewicht liegt in der
Größenordnung von 100 kg, wozu eine übliche Einzelschirmkappe ausreicht. Die Fangleinen derselben
schließen an einen Tragegurt an, welcher unten eine
Schlaufe zur Befestigung am Flugdrachen hat. Bei Nichtgebrauch ist der Fallschirm mit seinen Teilen in
einer Packhülle untergebracht, die am Drachen angebracht wird.

In Fortentwicklung des Drachenflugsportes sind die
Flugdrachen motorisiert worden, wodurch die sog.
Ultra-Leichtflugzeuge ("ULs") entstanden sind. Diese
haben größenordnungsmäßig das doppelte Gewicht der
Flugdrachen, also einschließlich Pilot rd. 200 kg.
Hierfür reicht das Flugdrachen-Rettungssystem mit
einer Fallschirmkappe nicht mehr aus, insbesondere weil
bei der doppelten Masse die Sinkgeschwindigkeit zu
groß werden würde. Deshalb wurde vorgeschlagen, den
Fallschirm mit der doppelten Widerstandsfläche auszurüsten, d. h. die Schirmkappe entsprechend zu vergrößern. Hiermit ist jedoch der Nachteil verbunden,
daß sich damit auch die Füllungszeit der Kappe entsprechend verlängert, was bei der geringen Flughöhe
dieser Fluggeräte (max. 150 m zugelassen) die Gefahr

- 3 - 0105543

enthält, daß der Abstieg nicht ausreichend gebremst
werden kann.

Der Erfindung liegt die Aufgabe zugrunde, ein Rettungs-
und Bergungssystem für insbesondere motorisierte
Drachenflieger zu schaffen, welches einerseits die
sichere Rettung des Sportlers und die weitestgehend
unbeschädigte Bergung seines Sportgerätes gewährleistet,
andererseits aber es dem Sportler möglich macht, seinen
in der Regel bereits vom nicht motorisierten Flugdrachensport her vorhandenen Fallschirm weiterverwenden zu können.

Die erfindungsgemäße Lösung dieser Aufgabe ergibt sich
einschließlich vorteilhafter Ausgestaltungen und
Weiterbildungen aus dem Inhalt der Patentansprüche,
welche dieser Beschreibung vorangestellt sind.

Die Erfindung wendet das bekannte Merkmal einer Fallschirmtraube bei Flugdrachen höherer Gewichtsklassen
zur Rettung des Menschen aus Luftnot und zur Bergung
des Gerätes an und verwirklicht gleichzeitig das Baukastenprinzip zur richtigen Einstellung der Sinkgeschwindigkeit im Abhängigkeit von der jeweiligen
Masse. Dabei spielt der Gesichtspunkt der Wiederverwendbarkeit schon vorhandener Rettungsmittel eine besondere Rolle. Gleichzeitig ergibt sich der Vorteil,
daß im Falle von Entfaltungsstörungen einer Schirmkappe eine bessere Rettungschance gegeben ist, als
wenn nur eine einzige größere Kappe vorhanden wäre,
wie es an sich bei Piloten von Motorflugzeugen der
Fall ist und auch für ein kleineres Motorflugzeug
naheliegen würde. Schließlich hat ein System mit
mehreren Fallschirmen noch den Vorteil eines verbesserten Pendelverhaltens, insbesondere eines geringeren
Pendelwinkels.

Für den Drachensportler, der sowohl einen Flugdrachen herkömmlicher Art als auch einen motorisierten
Flugdrachen besitzt und benutzt, ergibt sich durch
die Erfindung der weitere Vorteil, daß er nicht zwei
unabhängige und spezielle Rettungs- und Bergungssysteme
anzuschaffen braucht, sondern das System für das eine
Gerät auch für das andere Gerät einsetzen kann. Dabei
verfügt er mit zwei übereinstimmenden Systemen bzw.
Fallschirmen nicht nur über ein Rettungs- und Bergungsmittel für den motorisierten Flugdrachen, sondern
er hat auch ein Ersatzsystem für den Drachen ohne
Motorantrieb.

Ein besonderes Rettungs- und Bergungssystem für das
Gerät der höheren Gewichtsklasse müßte im übrigen einen
Tragegurt aufweisen, der für entsprechend größere
Kräfte ausgelegt ist. Weiterhin wären zusätzliche Beschlagteile in Form trennbarer Anschlußglieder erforderlich, die zusätzliches Gewicht bedeuten, sofern von
den Kosten abgesehen wird. Auch diese Nachteile werden
durch die Erfindung ausgeschlossen. Nach der Erfindung
entspricht die Summe der Y-förmig zusammengefaßten
Tragegurte stets den auftretenden Kräften, und dabei
bildet sich die Y-Form durch die Tragegurte selbst.

In der Zeichnung sind Ausführungsbeispiele der Erfindung
in zum Teil vereinfachter Darstellungsweise wiedergegeben, welche nachstehend beschrieben werden. Es
zeigen:

Fig. 1   ein Rettungs- und Bergungssystem mit einem
         Fallschirm für Flugdrachen ohne Motor,

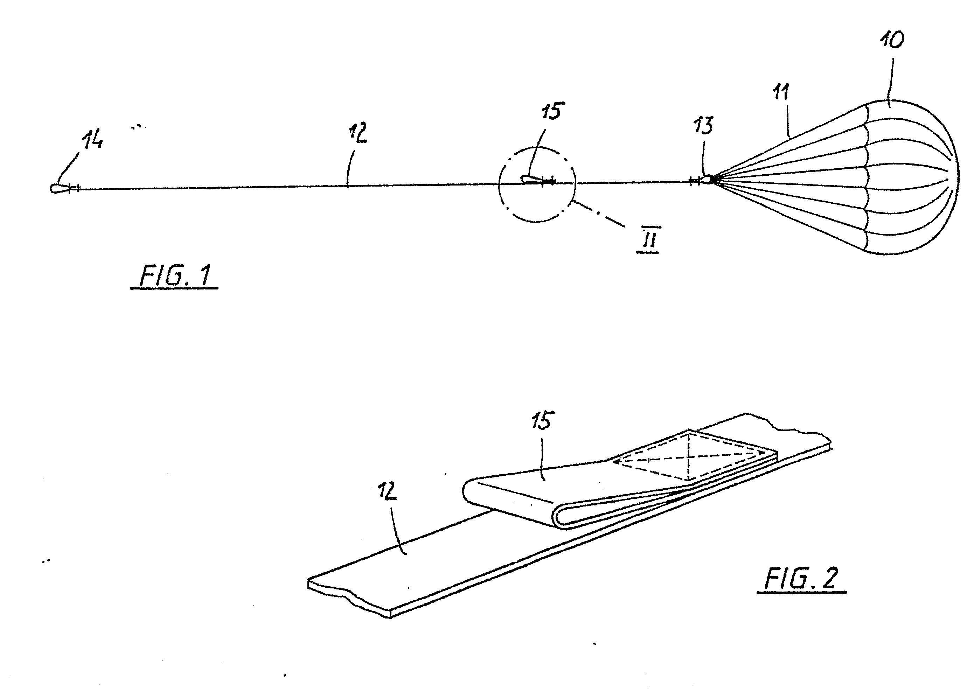

Fig. 2   in schaubildlicher vergrößerter Darstellung
         einen Teil des Tragegurtes gemäß Ausschnitt II
         in Fig. 1,

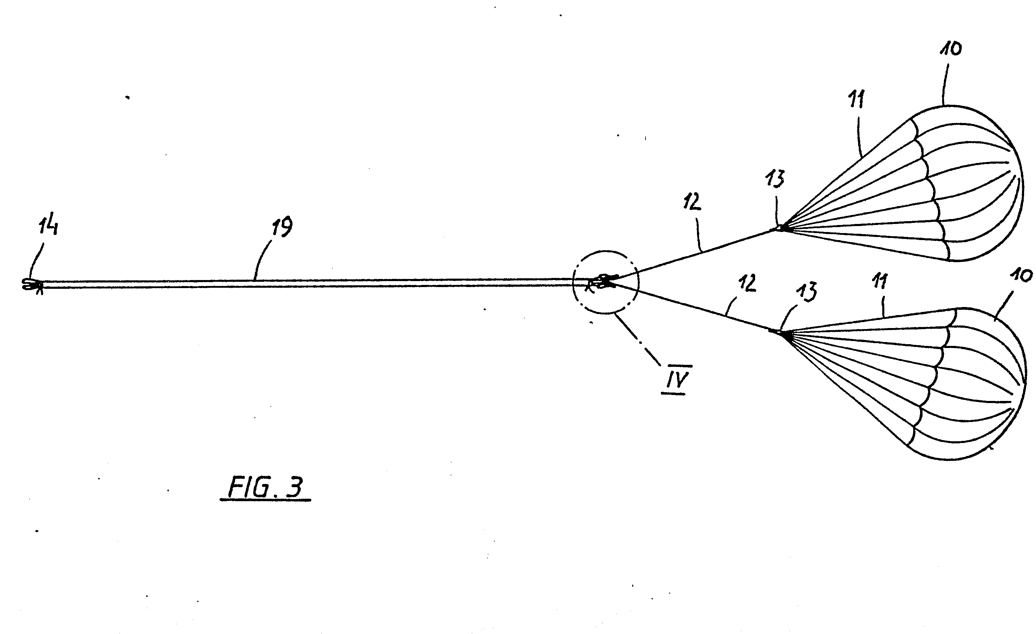

Fig. 3  ein Rettungs- und Bergungssystem mit Fallschirmtraube für motorisierte Drachenflieger,

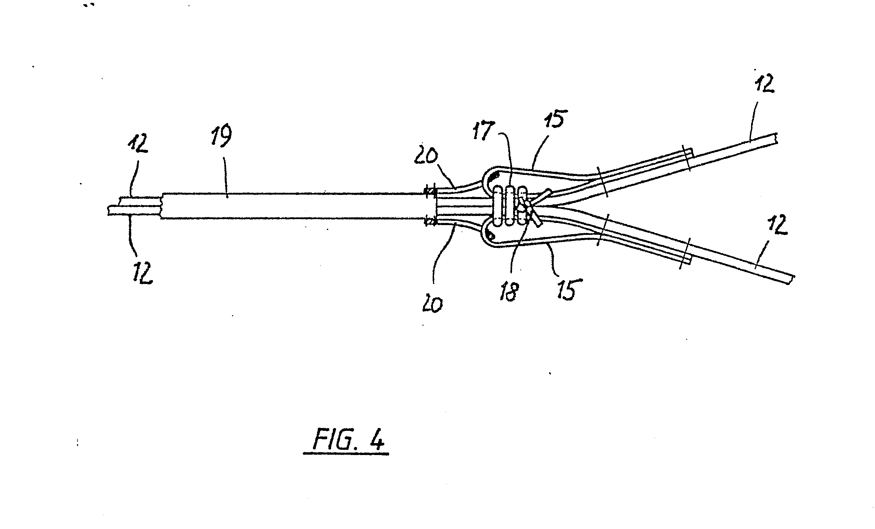

Fig. 4  in vergrößerter Darstellung einen Teil der
Y-Form gemäß Ausschnitt III in Fig. 3,

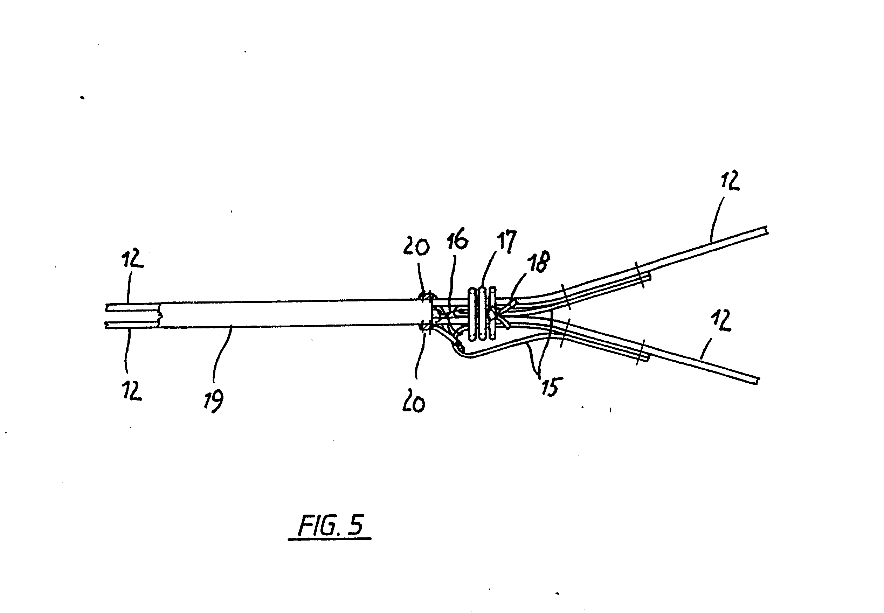

Fig. 5  eine alternative Ausführungsform entsprechend
Fig. 4.

Das in Figur 1 dargestellte System mit einem Fallschirm,
bestehend aus Schirmkappe 10 und Fangleinen 11, weist
einen Tragegurt 12 von vergleichsweise großer Länge
auf, der oben mit einer eingenähten Schlaufe 13 zum
Anschluß an die Fangleinen 11 und unten mit einer eingenähten Schlaufe 14 zum Anschluß an einen nicht dargestellten Flugdrachen versehen ist. An einer Stelle, die
ungefähr ein Viertel der Länge des Tragegurtes 12 von
der oberen Schlaufe 13 entfernt ist, trägt der Tragegurt 12, wie aus Figur 2 ersichtlich, eine einseitig
durch Näharbeit befestigte Öse 15, die bei dem gezeigten
Ausführungsbeispiel aus Gurtband hergestellt ist, aber
auch aus anderem Werkstoff bestehen könnte. Diese Öse
hat bei Anwendung des Systems gemäß Figur 1 als
Rettungs- und Bergungssystem für einen nicht motorisierten Flugdrachen keine wesentliche Funktion; ihre
Zweckbestimmung erfüllt die Öse 15 erst dann, wenn
das System als Baustein zur Bildung eines Rettungs- und
Bergungssystems für Flugdrachen höherer Gewichtsklassen,
insbesondere Flugdrachen mit Motor, verwendet wird.

Diese Verwendung ergibt sich aus den Figuren 3 - 5.
Danach werden zwei übereinstimmende Systeme gemäß
Figur 1 mit ihren Tragegurten 12 symmetrisch und im
Falle der Ausführung gemäß Figur 4 spiegelbildlich flach aneinandergelegt, so daß die beiden Schlaufen 14 unten unmittelbar nebeneinanderliegen, wodurch auch die Ösen 15 in gleicher Höhe nebeneinander liegen. Zur Fixierung dieser Lage kann ein dünnes, aus Figur 5 ersichtliches Packbändchen 16 durch die beiden Ösen 15 geführt und mit einem Knoten verschlossen werden. Das Packbändchen 16 ist materialmäßig so beschaffen, daß es als Sollbruchfaden wirkt. Alsdann wird eine Verbindungsleine ("Tampen") 17 von geeigneter Länge gemäß Figur 4 in mehreren Windungen durch die benachbarten Ösen 15 geschlungen, fest angezogen und zuletzt mit einem Knoten 18 geschlossen. Dabei erfaßt die Leine 17 nicht nur die Ösen 15, sondern auch die Tragegurte 12, so daß sich an dieser Stelle eine feste Verbindung ergibt. Hierzu besteht die Leine 17 aus einem geflochtenen oder geschlagenen Seil von entsprechender Qualität. Der Knoten 18 hat eine Knüpfweise, die ein selbsttätiges Lösen ausschließt; derartige Knoten sind herkömmlich. Anstelle eines Seiles kann es sich auch um ein entsprechend flexibles Band handeln. Durch das Verbindungselement 17 wird der Knotenpunkt der Y-Gestalt des Systems gemäß Figur 3 markiert.

Wie aus Figur 5 ersichtlich, kann das Zusammenlegen der Tragegurte 12 auch derart geschehen, daß die eine Öse 15 dabei zwischen den Tragegurten eingeklemmt wird und eine Art Polster bildet. Die Leine 17 verläuft hier mit ihren Windungen nur durch die außen liegende Öse 15 hindurch. Damit ergibt sich die Möglichkeit, daß sich die beiden Tragegurte 12 in vergleichsweise erheblichem Maße gegeneinander in Längsrichtung verschieben können, was in gewissen Anwendungsfällen vorteilhaft sein kann.

Über die sich vom Y-Knotenpunkt bis zu den Schlaufen 14 erstreckenden, parallel nebeneinander bzw. aneinander liegenden Abschnitte der Tragegurte 12 wird nach dem Schließen des Verbindungselementes 17 eine schlauchartige Hülle bzw. ein beiderseits offener Strumpf 19 gezogen, welcher die Tragegurte 12 zusammenhält und verhindert, daß sie auseinanderklaffen und sich dadurch irgendwo verfangen können. Die Hülle 19 hat an ihren beiden Enden jeweils zwei festgenähte Bändsel 20, mit denen die Hülle oben an den Ösen 15 und unten an den Schlaufen 14 festgebunden wird. Die diesbezüglichen Knoten sind in den Figuren 4 und 5 aus Vereinfachungsgründen nicht dargestellt. Auf diese Weise sitzt die Hülle 19 stramm über den Tragegurten 12, hält diese zusammen und schützt sie gegen Beschädigung und Verschmutzung, beispielsweise aufgrund der in diesem Bereich angeordneten Luftschraube des Drachenmotors. Zweckmäßigerweise ist die Hülle 19 aus entsprechend widerstandsfähigem Werkstoff gefertigt, beispielsweise aus dem unter dem Handelsnamen "Kevlar" eingeführten Material.

Das in Figur 3 dargestellte Rettungs- und Bergungssystem mit einer aus zwei Fallschirmen zusammengesetzten Fallschirmtraube bildet eine Einheit von ausreichender Trag- und Führungsfähigkeit für Flugdrachen mit höherem Gewicht, insbesondere Motor-Flugdrachen oder Ultra-Leichtflugzeuge, wobei diese Einheit aus zwei untereinander gleichen Bausteinen zusammengesetzt ist, die als solche ohne Änderung für Flugdrachen der leichten Gewichtsklasse verwendet werden können. Das Auseinandernehmen des Systems gemäß Figur 3 ist sehr einfach und kann schnell vorgenommen werden. Hierzu bedarf es nur der Lösung der Leine 17 und des Abziehens der Hülle 19. Dadurch werden auch Prüfung und Wartung der Teile erleichtert. Drachenflieger-Sportclubs brauchen sich nur das System gemäß
Figur 1 in mehreren Exemplaren anzuschaffen.

Die in der vorstehenden Beschreibung, den Patentansprüchen, der Zusammenfassung und der Zeichnung
offenbarten Merkmale des Gegenstandes dieser Unterlagen können sowohl einzeln als auch in beliebigen
Kombinationen untereinander für die Verwirklichung
der Erfindung in ihren verschiedenen Ausführungsformen
wesentlich sein.

— 9 —

**0105543**

Patentansprüche

1. Luftfahrt-Bergungssystem mit einer Fallschirmtraube, die wenigstens zwei Schirmkappen sowie die zugehörigen Fangleinen enthält, dadurch gekennzeichnet, daß zur Anwendung als Luftnot-Rettungssystem für Drachenflieger die Fallschirmtraube aus wenigstens zwei gleichen selbständigen Einzelfallschirmen mit zugeordnetem Tragegurt (12) zusammengefügt ist, wobei die Tragegurte durch wenigstens ein Verbindungsmittel (17) derart aneinander gekuppelt sind, daß sie eine Y-Form ausbilden.

2. Bergungssystem nach Anspruch 1, dadurch gekennzeichnet, daß die Tragegurte (12) jeweils an der Stelle, wo der Y-Knotenpunkt vorgesehen ist, mit einer Öse (15) versehen sind, durch die das Verbindungsmittel (17) lagemäßig fixierbar ist.

3. Bergungssystem nach Anspruch 2, dadurch gekennzeichnet, daß die Öse (15) des jeweiligen Tragegurtes (12) als aufgenähte Bandschlaufe ausgebildet ist.

4. Bergungssystem nach Anspruch 1, dadurch gekennzeichnet, daß das Verbindungsmittel (17) aus einem die Tragegurte (12) mehrfach umschlingenden bandförmigen Element, insbesondere einer geflochtenen oder geschlagenen Leine, besteht, dessen Enden zusammengeknotet sind.

5. Bergungssystem nach Anspruch 4, dadurch gekennzeichnet, daß sich das bandförmige Element (17) mit seinen Umschlingungswindungen durch die Ösen (15) der Tragegurte (12) erstreckt.

6. Bergungssystem nach Anspruch 4, dadurch gekennzeichnet, daß sich das bandförmige Element (17) mit seinen Umschlingungswindungen durch wenigstens eine Öse (15) eines Tragegurtes (12) erstreckt.

7. Bergungssystem nach Anspruch 5, dadurch gekennzeichnet, daß zwei Tragegurte (12) derart flach aneinandergelegt sind, daß sich die Ösen (15) jeweils außen befinden.

8. Bergungssystem nach Anspruch 6, dadurch gekennzeichnet, daß zwei Tragegurte (12) derart aneinandergelegt sind, daß sich die Öse (15) des einen Tragegurtes außen befindet, während die Öse (15) des anderen Tragegurtes in der Mitte zwischen den beiden Tragegurten eingeklemmt ist (Fig. 5).

9. Bergungssystem nach Anspruch 1, dadurch gekennzeichnet, daß sich eine schlauchförmige Hülle (19) zusammenfassend über die parallel nebeneinanderliegenden Abschnitte der Tragegurte (12) erstreckt, die im wesentlichen bis an die Ösen (15) heranreicht.

10. Bergungssystem nach Anspruch 9, dadurch gekennzeichnet, daß die schlauchförmige Hülle (19) durch wenigstens ein Verbindungsmittel (20) an wenigstens eine Öse (15) längsbewegungsfest angeschlossen ist.

11. Bergungssystem nach Anspruch 10, dadurch gekennzeichnet, daß der an die Ösen (15) anschließende Rand der schlauchförmigen Hülle (19) mit zwei Bändseln (20) zum Festbinden an den Ösen versehen ist.

12. Bergungssystem nach wenigstens einem der vorangehenden Ansprüche, dadurch gekennzeichnet, daß die Ösen (15) mittels eines Sollbruchfadens (16) zur Fixierung auf gleiche Höhe beim Packen verbunden sind.

_FIG. 1_

_FIG. 2_

0105543

FIG. 3

3/4

FIG. 4

12  12  15  15  17  18  20  20  19  12  12

FIG. 5